# EUROPEAN PATENT SPECIFICATION

(11) **EP 2 526 505 B1**
(45) Date of publication and mention of the grant of the patent: **17.06.2015**
(21) Application number: 11703624.4
(22) Date of filing: 19.01.2011
(51) Int. Cl.: G06F 21/60, H04L 9/08, H04L 9/30

(54) **DEVICE AND METHOD FOR OBTAINING A CRYPTOGRAPHIC KEY**
VORRICHTUNG UND VERFAHREN ZUM ERHALT EINES KRYPTOGRAPHISCHEN SCHLÜSSELS
DISPOSITIF ET PROCÉDÉ D'OBTENTION D'UNE CLÉ CRYPTOGRAPHIQUE

(30) Priority: 20.01.2010 US 296656 P
(43) Date of publication of application: 28.11.2012
(73) Proprietor: Intrinsic ID B.V., 5656 AE Eindhoven (NL)
(72) Inventor: TUYLS, Pim, Theo, 2300 Turnhout (BE); HANDSCHUH, Héléna, Palo Alto, CA 94301 (US)
(74) Representative: DeltaPatents B.V.
(86) International application number: PCT/EP2011/050656
(87) International publication number: WO 2011/089143

(56) References cited:
- WO-A2-2009/024913
- US-A1- 2004 146 015
- US-A1- 2006 013 402
- US-A1- 2006 210 082
- US-A1- 2008 279 373
- JORGE GUAJARDO ET AL: "FPGA Intrinsic PUFs and Their Use for IP Protection", 10 September 2007 (2007-09-10), CRYPTOGRAPHIC HARDWARE AND EMBEDDED SYSTEMS - CHES 2007; [LECTURE NOTES IN COMPUTER SCIENCE], SPRINGER BERLIN HEIDELBERG, BERLIN, HEIDELBERG, PAGE(S) 63 - 80, XP019099274, ISBN: 978-3-540-74734-5 pages 67-73

## Description

### FIELD OF THE INVENTION

The invention relates to a computing device for obtaining a first cryptographic key during an enrollment phase, the computing device comprising a key generator for generating the first cryptographic key in dependence upon a seed, the computing device being configured for storing the first cryptographic key on a storage of the computing device for later cryptographic use of the first cryptographic key on the computing device during a usage phase coming after the enrollment phase.

### BACKGROUND OF THE INVENTION

For some cryptographic purposes cryptographic keys are needed of a special type. For example, to enable a computing device, such as a smart card, to digitally sign messages it needs a special signing key. Using the signing key the device can create a signature for the message protecting the message's integrity and proving its authenticity. At a receiving end of such a message the digital signature may be verified for authenticity using a verification key corresponding to the signing key.

The signing key must be kept confidential. Suppose, for example, that the message instructs the receiver to transfer a sum of money from one bank account to another. If the signing key leaks out then unauthorized persons, hereinafter referred to as attackers, might use the signing key to create unauthorized messages having signatures which are indistinguishable from authentic signatures. Financial losses may be incurred as a result of a breach of confidentiality of the signing key.

Signing and verification is an example of public key cryptography. Public key cryptography works with a key pair comprising a public key and a private key. The private key is typically kept confidential. The key pair is constructed such that the private key cannot be computed from the public key, or at least only with an unrealistically large computational effort. The signing key mentioned above is a private key; the verification key is a public key. Although a verifier who has knowledge of the public key can use it to verify messages, he cannot use it to obtain the private key or to sign messages.

Another example of public key cryptography using a key pair is public key encryption. In public key encryption a message is encrypted, i.e., its confidentiality is protected, by using the public key, in such a way that the private key is needed for decryption. Knowledge of the public key alone does not enable one to obtain the private key and thus decrypt a message encrypted with the public key.

The RSA Cryptography Standard (PKCS #1 v2.1) gives two examples of a signing/verification algorithm based on RSA: RSASSA-PSS and RSASSA-PKCS1-V1.5. For both of these algorithms a special key is needed. Two key types are employed: an RSA public key and an RSA private key. Together, the RSA public key and the RSA private key form an RSA key pair. For signing operations the RSA private key is needed. To generate the private key, two large prime numbers must be generated. The size of these prime numbers is typically at least 512 bits, but which may be chosen larger for more secure applications, e.g., 1024, 2048 bits etc.

In the art algorithms are known to generate prime numbers. For example, starting from a seed, a list of prime number candidates, e.g. odd integers, can be sequentially verified for primality using a primality test, e.g., the Miller-Rabin primality test. Once two prime numbers have been found of the appropriate sizes an RSA key pair may be constructed. The RSA key pair generation is a computationally intensive process. The generation needs arithmetic on large numbers. Moreover, it cannot be predicted beforehand how many prime candidates from the list must be examined before a prime number is found. The running time of the key generation algorithm can in unfavorable situations turn out much longer, for example, when a prime number is found only late in the list.

Public key cryptography is also known as asymmetric cryptography. Public and private keys are also known as asymmetric keys.

There exist other cryptographic algorithms that need specially constructed keys. The type of key that is needed depends on the details of the algorithm. Other cryptographic algorithms using private keys include private keys used for discrete logarithm based cryptosystems, such as DSA, Schnorr, El Gamal, etc.

There exist other cryptographic algorithms which can use any random bit string as a key. For example, the AES encryption algorithm can use any 128 bit sequence as an encryption key. The AES encryption algorithm is an example of symmetric encryption which uses a symmetric key, that is, knowledge of the encryption key enables one to derive the decryption key without or with only a comparatively small computational effort. Message authentication codes are an example of algorithms with provide some level of authenticity while using symmetric keys.

It is known that the generation process of some types of cryptographic keys, in particular some types of private keys, can be computationally intensive. In spite of this, to improve confidentiality, cryptographic keys of this type are sometimes generated on the computing device itself, instead of being generated offline and then uploaded to the computing device. Especially on resource limited devices such as smart cards the key generation process may take a long time. Moreover, the storage of sensitive information such as a cryptographic key is insecure if an attacker manages to gain access to the data of the computation device.

Reference is made to US Patent application US 2008/279373 A1 with title "Method and System for Electronically Securing an Electronic Device Using Physically Unclonable Functions", showing a system for securing an integrated circuit chip used in an electronic device by utilizing a circuit to produce physically unclonable functions (PUF) to generate a security word, such as an RSA public or private key.

Reference is made to US Patent application US 2006/013402 A1 with title "Method of delivering Direct Proof private keys to devices using an on-line service", showing an on-line server to support key retrieval requests from client computer systems.

### SUMMARY OF THE INVENTION

A problem associated with known systems for obtaining cryptographic keys is that they rely on storing the cryptographic key, which is insecure if an attacker manages to obtain the content of the computing device.

It would be of advantage to have a computing device for obtaining a cryptographic key wherein the security of obtaining and/or storing the cryptographic key is increased.

The computing device for obtaining a first cryptographic key during an enrollment phase according to the invention comprises a key generator for generating the first cryptographic key in dependence upon a seed. The computing device is configured for storing the first cryptographic key on a storage of the computing device for later cryptographic use of the first cryptographic key on the computing device during a usage phase coming after the enrollment phase. The computing device further comprises a physically unclonable function (PUF). The key generator is configured for deriving the seed from an output of the physically unclonable function. The computing device further comprises an encryption module for encrypting the first cryptographic key using a second cryptographic key derived from the output of the physically unclonable function. The computing device is configured for storing the first cryptographic key on the storage in encrypted form.

This computing device is configured in such a way that when it needs the first cryptographic key at some point in time after the enrollment phase, it does not need to regenerate the first cryptographic key, it only needs access to the second cryptographic key and the encrypted first cryptographic key. The second cryptographic key can be obtained by the computing device since it has access to the physical unclonable function. Using the second cryptographic key the first cryptographic key can be decrypted and used.

This makes it possible to exchange a time consuming key generation process for the first cryptographic key by a less time consuming key derivation process for the second key. For example, consider the situation wherein the first cryptographic key is an RSA key pair, and wherein the second key is an AES key. The generation of the RSA key pair takes much longer than the derivation of the AES key. To generate the RSA key a number of primality tests are done using large number arithmetic, whereas the AES key may be derived with a single hashing operation on the PUF output. The output of the PUF may even be used directly as a key, e.g., as a symmetric key, such as an AES key, without further processing.

This also applies to other RSA-like crypto systems like, e.g. the Paillier Cryptosystem. Generating a public/private key pair for Paillier comprises finding two large prime numbers. Avoiding the key generation process during a usage phase of the computing device is an advantage.

The computing device has increased security against attackers. The first cryptographic key is stored in encrypted form. Even if an attacker might obtain a copy of the stored, encrypted first cryptographic key, it would be useless to him, since he does not have the second cryptographic key which is not permanently stored on the computing device. If an attacker obtains access to data stored at the computing device, he does not necessarily also obtain control over the computing device's functionality. Accordingly, obtaining the second cryptographic key poses additional difficulties to him, since that key is not stored on the device in digital form and can only be derived with access to the physically unclonable function.

It was an insight of the inventors that this increase in security can be obtained without repeatedly going through the key generation process for the first cryptographic key. Consider the following alternative solution to increase the security of the computing device: During usage of the computing device the seed is derived from an output of the physically unclonable function. The first key is generated from the seed during the usage phase. By using a deterministic key generator the same first cryptographic key will be generated each time it is needed. Although this solution avoids storing the first cryptographic key in digital form, it requires a lengthy boot-up procedure before the key can be used. During each boot-up procedure the first key is derived again from the seed using the key generator. Although this solution avoids storing the first cryptographic key it requires use of the key generator each time the first key is needed. By storing the first cryptographic key in encrypted form this time consuming repeated regeneration is avoided.

Generating the first cryptographic key from a seed which is derived from the output of the physically unclonable function and encrypting the first cryptographic key with a key of a second type which is also derived from the same output has additional advantages. It is avoided that a secure key storage is needed to store the second key; instead it can be regenerated at will. Note that if this second cryptographic key were to be permanently stored, e.g. in non-volatile memory, then it ought to be stored in a secure storage, since access to it allows decryption of the first cryptographic key. Secure storage, e.g. secure memory, is relatively expensive compared to ordinary memory. Consequently, many computing devices do not posses such secure storage or have only relatively little of it. Moreover, even if some type of storage is used which is considered more secure than ordinary memory, say fuses, it is less resistant against invasive attacks than PUFs are.

Deriving the second key from an output of the PUF avoids the need of storing the second key and it avoids the need of storing the first cryptographic key in secure storage. Moreover, by using the output of the physically unclonable function to derive a seed and/or keys, it is avoided that a random number generator is needed. Supplying random number generators increases the cost of a computing device. Especially in low cost applications such as RFIDs, but even on smart cards, it is an advantage if a separate random number generator can be avoided. Many computationally restricted devices do not posses a random number generator, but do posses components which may be used as a PUF. Such components may include memory such as SRAM memory.

Moreover, by deriving the first key from an output of the physically unclonable function increases the non-repudiation properties of the system. Given the physical unclonable function and any other data which may have been used during the key generation, e.g. helper data, it can be verified that a particular first cryptographic key is linked to this particular physical unclonable function. Accordingly, it becomes harder to deny that a particular signature was made with a particular computing device. The non-repudiation properties may be further increased by signing the other data, such as helper data, with a private key not stored on the computing device, and/or storing the other data off the computing device with a trusted server. The corresponding public key may be stored on the computing device, e.g., in read only memory, and could be used to verify the other data during the usage phase and/or enrollment phase.

Examples of computing devices include RFID (Radio-frequency identification) tags, smart cards, mobile phones, set-top boxes, etc. The computing device may comprise integrated circuits and/or a Field Programmable Gate Array (FPGA) for implementing all or part of its functionality and/or for implementing the PUF.

The enrollment phase may further configure the computing device for later use. For example during the enrollment phase an identification of a future user of the computing device may be uploaded. For example, the computing device may be used as an Electronic Passport wherein during the enrollment phase the identification of its user is uploaded. An identification may be cryptographically linked to the first cryptographic key, for example by signing the identification and storing the signature. A public key which corresponds to the private key and which may be derived after or during the key generation may be uploaded off the computing device, e.g., to a server. This allows later verification of the identification. In this way the identifying properties of the passport are linked to the hardware of the passport. This makes counterfeiting of a computing device storing data, e.g. of electronic passports storing identification, harder.

During the enrollment also so-called helper data may be generated. Helper data assists in correcting errors which may occur in the output of a PUF. Using the helper data the output and further output is for practical purposes always the same.

The key generator for generating the first cryptographic key may generate an RSA private key. The key generator may also generate the corresponding public key. The key generator may also compute alternative representations of the private key. In particular for RSA at least two representations for private keys exist, one in which the individual prime numbers are stored, and one wherein this is not done. Storing the prime numbers allows faster computation of signatures using the Chinese remainder theorem. Not storing the prime numbers is possible by storing the so-called secret or private exponent.

The key generator may search for primes by testing a sequence of prime number candidates for primality. The sequence may be a linear sequence starting with the seed. The seed may be used to initialize a pseudorandom number generator to generate the sequence. In dependence of the output of the pseudorandom number generator a first cryptographic key may be searched and eventually found. Examples of pseudo random functions include, linear shift registers, stream ciphers, etc. For example, a block cipher, e.g., AES, may be run in counter mode, starting from the seed.

After the enrollment phase the first cryptographic key may be used for cryptographic purposes. For example, if the first cryptographic key is a signing key, the key may be used to sign messages, if the first cryptographic key is an encryption key, the key may be used to encrypt messages, etc. In this way authenticity and confidentiality, respectively, of the messages is improved.

Many types of physically unclonable functions may be used. Different types will be discussed below. A physically unclonable function may be used wherein the output depends upon a challenge chosen from multiple possible challenges. In this situation the challenge used when generating the further output is chosen such that the further output is the same as the output, or at least for practical purposes sufficiently likely so. Both challenges may be chosen equal. The challenge may be stored on the computation device, received from a server external to the computing device, etc. A physically unclonable function may be used which allows only a single challenge.

The seed may be derived from an output of the physically unclonable function in many ways. For example, a hash function or a key derivation function may be applied to the output. Note that any hash function may be salted to increase the independence between different applications of the same hash function. This functionality may be integrated with the PUF. The hash function may be a cryptographic hash function or a universal hash function or (strong) extractor.

Storing the first cryptographic key on a storage of the computing device may be done by storing information which allows to reproduce the first cryptographic key.

The encryption module for encrypting the first cryptographic key may be implemented as dedicated hardware. Using dedicated hardware for encryption may be a good tradeoff since relatively few gates are required to obtain a relatively large increase in speed. Similarly, a coprocessor for large number arithmetic may be implemented in dedicated hardware for cryptographic use, e.g., key generation, signing, etc.

The deriving of the second cryptographic key preferably uses a key derivation algorithm that executes faster on the computation device than the generation of the first key.

The first cryptographic key may be the private key and optionally the public key of a public/private key pair. The public/private key pair may be keys for integer factorization based public key cryptosystems, such as an RSA public/private key pair. The public/private key pair may be keys for discrete logarithm based public key cryptosystems. The public/private key pairs can be keys for elliptic curve based public key cryptosystems. If needed, the public key can be derived from the private key relatively fast.

In an embodiment, the computing device comprises a decryption module for decrypting the stored, encrypted, first cryptographic key using the second cryptographic key derived from a further output of the physically unclonable function, during the usage phase.

Using the decryption module the first cryptographic key can be recovered from the further output of the physically unclonable function. The functionality needed during the usage phase, e.g., the decryption module, may be supplied to the computing device at a later date than the functionality needed during the enrollment phase, e.g., in a software update. The functionality needed to generate the first cryptographic key may be removed after the first cryptographic key is generated and stored. The functionality needed to decrypt the first cryptographic key may overwrite the functionality needed to encrypt and/or generate the first cryptographic key. Functionality can be received on the computing device, e.g., in the form of a software patch or in the form of a bitstream to configure an FPGA, etc.

The decryption module may share a large part of its functionality with the encryption module, especially if they use a symmetric algorithm.

In an embodiment, the first cryptographic key comprises at least a private key from a cryptographic public-private key pair. Generating private keys for many cryptographic algorithms is computationally expensive. For example, generating private RSA keys whether for use in encryption or signing applications is computationally expensive. Although it is not recommended for the highest levels of security, it is possible to use the same RSA private key both for signing and encrypting.

In an embodiment, the second cryptographic key is a symmetric key. Deriving symmetric keys is computationally cheap. For many cryptographic systems it suffices to produce a bit-string, e.g., using a key derivation algorithm, or a hash function etc. Examples of symmetric encryption algorithms include block ciphers, such as AES, DES, etc, stream ciphers, e.g., RC4 and one-time pads. The second cryptographic key will usually be used more than once; nevertheless the encryption and decryption algorithms of one-time pads are applicable.

In an embodiment, the second cryptographic key comprises the seed. The seed may be re-used as the second cryptographic key or part thereof. This has the advantage that no separate derivation of seed and second cryptographic key is needed. In particular the second cryptographic key may be equal to the seed.

In an embodiment, the encryption operation performed by the encryption module comprises computing a difference between the second cryptographic key and the first cryptographic key. The length, e.g. bit-size, of the second cryptographic key and the first cryptographic key is typically comparable. In particular the second cryptographic key may be chosen to have a bit-size which is at least as long as the bit-size of the first cryptographic key. Sizes of cryptographic keys can be predicted in advance and are relatively short when compared to messages. In this situation a fast way to encrypt the first cryptographic key is to compute a difference between these two strings. In particular when the second encryption key comprises, or is equal to the seed, an efficient implementation of deriving the seed, deriving the second cryptographic key and encrypting the first cryptographic key is obtained. The second cryptographic key may comprise the seed. For example, a first part of the second cryptographic key may comprise the seed, and a second part of the second cryptographic key may comprise a further encryption key. The further encryption key may be used to encrypt the difference between the seed and the first cryptographic key. For example the further encryption key may be a symmetric key, such as an AES key.

In an embodiment, deriving of the second cryptographic key from the output comprises applying a hash function to the output. The distribution of the output of the PUF is preferably indistinguishable from a true random distribution. However, even if this is not the case the PUF may be used. To mask a deviation of the PUF from a true random output a hash function or (strong) extractor may be used. After application of the hash function these deviations are less visible. For example, if the PUF has a slight bias towards '1' bits instead of '0' bits, this bias disappears after application of the hash function. Examples of hash functions include cryptographic hash functions, such as SHA-1, SHA-256, etc, non-cryptographic hash functions, such as CRC. Also universal hash functions may be used.

In an embodiment, the storage is external to the computing device and connectable to the computing device. This has as an advantage that the computing device only obtains access to the first cryptographic key when it later obtains the encrypted version. If any other cryptographic device obtains the encrypted first cryptographic key it would be unusable for it, since that device does not have access to the PUF needed to derive the correct second cryptographic key. This mechanism may be used to unlock functionality on the computing device. For example, the computing device may comprise software encrypted with the first cryptographic key. Only when the encrypted cryptographic key is received at the computing device, is it possible to use the encrypted software.

In an embodiment, generating the first cryptographic key comprises obtaining a prime number. The first cryptographic key comprising multiple key components, at least one of the key components being the prime number. Obtaining the prime number comprises generating in dependency on and determined by the seed candidate prime numbers and testing the candidate prime numbers for primality until the prime number is obtained. An index indicates a number of candidate prime numbers which were tested to obtain the prime number. Encrypting the first cryptographic key comprises representing the prime number with the index.

One way to generate a prime number is to generate prime number candidates. Each prime number candidate is tested to see if it is a prime number. If the prime number candidate is not a prime it is discarded and a next prime number candidate is generated. If the prime number candidate is a prime, the prime number generation is finished. If one knows how the prime number candidates are generated from the seed and how many prime numbers were tested one can regenerate the prime number during the usage phase much faster. During the usage phase the prime number candidates are regenerated but not tested. Once the same number of prime number candidates have been generated during the usage phase as during the enrollment phase the correct prime number is found. The time consuming primality tests are avoided. If the list of prime number candidates follows a sufficiently regular pattern the prime number candidate which turned out to be the prime number may also be generated directly from the seed during the usage phase. In an embodiment, the index represents the arithmetical difference between the seed and the prime number. In this way the index can simply be added to the seed to obtain the prime number. For example, the index can be produced by the key generator.

For example, one way to compute the prime number candidates from the seed, is to generate the odd numbers starting from the seed. From the seed and the index the correct prime number may be directly computed. In this way the arithmetical difference between the seed and the prime number is surprisingly short, of the order of the natural logarithm (also written as 'In') of the seed. Accordingly, by encrypting the first cryptographic key by representing one or more of its constituent prime numbers as differences the storage requirements of the encrypted first cryptographic key is smaller than the storage requirements of the unencrypted first cryptographic key would be.

The so-called prime number theorem supports this surprising insight, i.e., that by encoding prime numbers as the difference between a starting point, e.g. a seed, and the prime number can decrease its size. The prime number theorem (PNT) describes the asymptotic distribution of the prime numbers. The prime number theorem gives a rough description of how the primes are distributed. The prime number theorem states that if a random number nearby some large number N is selected, the chance of it being prime is about 1 / ln(N).

It is not necessary that the prime number candidates are generated in a strictly increasing sequence. To obtain the advantage of shortened encrypted representation of the first cryptographic key, it is sufficient if the prime number candidates are generated pseudo randomly but of approximately the same size as the seed. For example, a most significant part of the seed may remain fixed, while a least significant part of the seed is varied in a pseudo random manner, wherein the most significant part and the least significant part together form the whole of the seed. For example, the least significant part may be half of the size of the seed, or a fixed number of bits, e.g., 32 bits.

In an embodiment, the computing device comprises or is comprised in any one of an RFID tag, smart card, mobile phone, set-top box, computer, laptop, netbook, a set-top box, an electronic circuit, etc. The electronic circuit may be an integrated circuit, e.g., a CMOS device.

In general in any application wherein the confidentiality of a first cryptographic key is important, and wherein one wishes to avoid repeated regeneration of that key, the invention can advantageously be applied.

In an embodiment, the physically unclonable function comprises any one of:
- a memory configured as a physically unclonable function, in particular a volatile memory such as an SRAM, Flip Flop, or Register file configured as a physically unclonable function,
- an FPGA configured as a physically unclonable function, in particular an FPGA configured for a butterfly PUF,
- a physically unclonable function based on measuring a delay in an integrated circuit,
- an optical physically unclonable function,
- an oscillation based PUF, an Arbiter PUF.

The physically unclonable function may be based on the behavior, e.g. the start-up behavior of volatile memories.

A further aspect of the invention concerns a method for obtaining a first cryptographic key during an enrollment phase. The method comprises generating the first cryptographic key in dependence upon a seed, and storing the first cryptographic key on a storage for later cryptographic use of the first cryptographic key during a usage phase coming after the enrollment phase. The method further comprises deriving the seed from an output of a physically unclonable function and encrypting the first cryptographic key using a second cryptographic key derived from the output of the physically unclonable function, and wherein storing the first cryptographic key comprises storing the first cryptographic key on the storage in encrypted form.

An embodiment of the method, comprises decrypting the stored, encrypted, first cryptographic key using the second cryptographic key derived from a further output of the physically unclonable function, during the usage phase.

A method according to the invention may be implemented on a computer as a computer implemented method, or in dedicated hardware, or on a FPGA, or in a combination thereof. Executable code for a method according to the invention may be stored on a computer program product. Examples of computer program products include memory devices, optical storage devices, integrated circuits, servers, online software, etc. The hardware may comprise a microcontroller or a processor, etc.

In a preferred embodiment, the computer program comprises computer program code means adapted to perform all the steps of a method according to the invention when the computer program is run on a computer. Preferably, the computer program is embodied on a computer readable medium.

### BRIEF DESCRIPTION OF THE DRAWINGS

The invention is explained in further detail by way of example and with reference to the accompanying drawings, wherein:
Figure 1 is a block diagram illustrating a first embodiment of a computing device,
Figure 2a shows a schematic top-view of a smart card,
Figure 2b is a block diagram illustrating an integrated circuit,
Figure 3 is a flow chart illustrating a first embodiment of a method according to the invention,
Figure 4 is a flow chart illustrating a second embodiment of a method according to the invention.

Throughout the Figures, similar or corresponding features are indicated by same reference numerals.

### List of Reference Numerals:

- 100: a computation device
- 110: a key generator
- 115: a seed derivation module
- 120: an encryption module
- 125: a key derivation module
- 130: a storage
- 140: a decryption module
- 150: a physically unclonable function
- 160: a further cryptographic module
- 170: a sender-receiver
- 200: a smart card
- 210: an integrated circuit
- 205: a card
- 220: a processing unit
- 222: a memory
- 224: a physically unclonable function
- 226: a communication element
- 230: a bus
- 300: a method for obtaining a first cryptographic key
- 310: deriving a seed from an output of a physically unclonable function
- 320: generating the first cryptographic key in dependence upon a seed
- 330: deriving a second cryptographic key from the output of the PUF
- 340: encrypting the first cryptographic key using the second cryptographic key
- 350: storing the first cryptographic key on a storage in encrypted form
- 360: decrypting the encrypted, first cryptographic key using the second cryptographic key
- 400: a method for obtaining a first cryptographic key
- 405: Obtain PUF output
- 410: Obtain first seed
- 415: Obtain second seed
- 420: Obtain first prime as the result of applying next prime function to the first seed
- 425: Obtain second prime as the result of applying next prime function to the second seed
- 440: Obtain first index as difference between first prime and first seed
- 445: Obtain second index as difference between second prime and second seed

### DETAILED EMBODIMENTS

While this invention is susceptible of embodiment in many different forms, there is shown in the drawings and will herein be described in detail one or more specific embodiments, with the understanding that the present disclosure is to be considered as exemplary of the principles of the invention and not intended to limit the invention to the specific embodiments shown and described.

Below a description is given of some of the elements of the invention, followed by a detailed description how those elements may be combined.

### Physically unclonable functions

A Physical Unclonable Function (PUF) is a function which is embodied as a physical system, in such a way that an output of the function for an input is obtained by offering the input to the physical system in the form of a stimulus, and mapping the behavior that occurs as a result of an interaction between the stimulus and the physical system to an output, wherein the interaction is unpredictable and depends on essentially random elements in the physical system, to such an extent, that it is unfeasible to obtain the output, without having had physical access to the physical system, and that it is unfeasible to reproduce the physical system. Preferably, a PUF is also easy to evaluate. For practical uses, PUFs are preferably low in manufacturing costs.

Conventionally, an input or stimulus that a PUF accepts is called a 'challenge'. The output of a PUF, that is, the behavior the PUF exhibits after interaction with the stimulus, is called a 'response'. A pair comprising a challenge and the corresponding response of a PUF is called a challenge-response pair. Some types of PUFs allow a wide range of different inputs, some types allow a more limited range of inputs, or may even allow only a single input. Challenging a PUF with some single challenge may also be called an 'activation' of the PUF.

It would be most preferable, if a PUF when evaluated multiple times for the same challenge would produce multiple responses which are all equal. This property is not necessary though, and, in practice, most PUFs do not posses it. As long as the multiple responses lie sufficiently close to each other, the PUF can be usefully applied.

Since the interaction between a stimulus and the physical system cannot be predicted without access to the system, the PUF is hard to characterize and to model. The output of a particular PUF for an input can therefore only be obtained using the particular physical system underlying the particular PUF. Possession of a challenge-response pair is a proof that at some point the challenge was offered to the unique physical system that underlies the PUF. Because of this property, i.e., the property that challenge-response pairs are coupled to a unique physical device, a PUF is called unclonable. By equipping a device with a PUF, the device also becomes unclonable.

Physical systems that are produced by a production process that is, at least in part, uncontrollable, i.e., a production process which will inevitably introduce some randomness, turn out to be good candidates for PUFs.

One advantage of PUFs is that they inherently possess tamper resistant qualities: disassembling the PUF to observe its working, will also disturb the random elements and therefore also disturb the way inputs are mapped to outputs. Various types of PUFs are known in the art, including various types of electronic PUFs, including various types of PUFs based on electronic memories. PUFs may also be based on other concepts, e.g., optical PUFs. In an optical PUF the optical response is measured of an optically active system.

One way of constructing a PUF uses a static random access memory (SRAM); these PUFs are called SRAM PUFs. SRAMs have the property that after they are powered-up, they are filled with a random pattern of on-bits and off-bits. Although the pattern may not repeat itself exactly if the SRAM is powered-up a next time, the differences between two such patterns is typically much smaller than half the number of bits in the state.

A second kind of SRAM PUF is constructed with Dual Port RAM. By writing at the same time different information on both ports, i.e., challenging the RAM with the different information, the memory cell is brought into an undefined state, which shows a PUF-like behavior.

Due to unavoidable variations during production, e.g. deep submicron process variations, the configuration of the components of an SRAM relative to each other is at least slightly random. These variations are reflected, e.g., in a slightly different threshold voltage of the transistors in the memory cells of the SRAM. When the SRAM is read out in an undefined state, e.g., before a write action, the output of the SRAM depends on the random configuration. Producing a new SRAM, with the same characteristic behavior requires producing an SRAM with the same configuration, a configuration which was achieved randomly. As this is unfeasible, the SRAM is unclonable as a physical system, that is, it is a PUF.

Other examples, of volatile memory elements showing PUF behavior are a flip-flop and a latch. At start up, a flip-flop, such as may be included in an integrated circuit, will be filled with a random value. The random value depends on the precise way the flip-flop is constructed. A slight alteration in the configuration of the various components that construct the flip-flop may alter the random value.

A further example of PUFs is the so-called Butterfly PUF. The Butterfly PUF comprises a plurality of butterfly PUF cells. A butterfly PUF cell comprises a cross-coupling of two latches or flip-flops. The butterfly PUF can be implemented on a Field Programmable Gate Array (FPGA), even if the FPGA does not comprise SRAM. The butterfly PUF cell can be viewed as a simulation of an SRAM memory cell using elements that are available on an FPGA. The way a butterfly operates is also similar to that of the SRAM. The butterfly PUF is also able to extract secrets from the complex physical characteristics of the integrated circuits on which it is implemented. Butterfly PUFs are explained more fully in the following paper: Sandeep S. Kumar, Jorge Guajardo, Roel Maes, Geert-Jan Schrijen, Pim Tuyls, "The butterfly PUF protecting IP on every FPGA,", pp.67-70, 2008 IEEE International Workshop on Hardware-Oriented Security and Trust, 2008. The butterfly PUF is also described in the international patent application "Identification of Devices Using Physically Unclonable Functions", published as WO2009/024913, and incorporated herein by reference. See in particular figures 8 and 10, and the corresponding description.

A further example of PUFs are coating PUFs. A coating is applied to an integrated circuit. The capacitance induced by the coating varies across its surface due to a random distribution of dielectric particles inside it. Measuring the capacitance at different places of the coating gives different values. The measured values may be mapped to digital, e.g. bit-wise, values. An advantage of coating PUFs is that they are relatively reliable and require only little error-correction.

European patent application EP0313967, "Authentication method for a data carrier with integrated circuit", incorporated herein by reference, describes how the differing programming times of storage cells in an E2-PROM can be used as a PUF.

Yet a further type of PUFs are so-called delay PUFs. A delay PUF comprises at least one electronic wire. The precise delay characteristic of the wire is indicative for the response of the PUF. Delay based PUFs can be constructed in various manners. In an arbiter PUF two delay paths are excited simultaneously, which will make two transitions race against each other through their respective paths. At the end of both paths an arbiter awaits their signals to determine which of the two rising edges arrives first. Based on which is first the arbiter produce one bit of output, e.g., the arbiter sets an output to 0 or 1. To produce additional bits of output, the circuit may comprise an n-bit challenge input which is used to configure the delay paths.

An oscillation based PUF circuit may comprise a number of identically laid-out delay loops (ring oscillators), which oscillate with a particular frequency. Due to manufacturing variation each ring oscillates at a slightly different frequency. In order to generate an output bit, two rings are selected and their frequencies compared. A k-bit output can be created by selecting k different oscillator pairs, e.g., on the basis of a challenge input.

One application of PUFs is to derive a cryptographic key on an electronic circuit. The electronic circuit typically includes an integrated Circuit (IC) and/or programmable logic. The programmable logic comprises, e.g., a field-programmable gate array (FPGA), a programmable logic device (PLD), or a digital signal processor (DSP), a microprocessor, etc. Instead of storing the cryptographic key in a non-volatile memory of some kind, the key is generated from the PUF only when the key is needed by the device. The key can be deleted when it is no longer needed. The next time the key is needed, it can be derived again from the PUF. Since the PUF may not give the exact same result when the same challenge is evaluated twice, a so-called Helper Data algorithm, also known as a Fuzzy Extractor, may be used to ensure that the key will be the same, each time it is derived. One way of using helper data to construct reproducible output values from noisy measurements is described, e.g., in international patent application WO 2006/129242, "Template Renewal in Helper Data Systems", which is included herein by reference. Known systems that use a PUF to create a cryptographic key do not store the created keys, and in international patent application WO /2004/066296, "Reliable Storage Medium Access Control Method And Device", incorporated herein by reference.

One way to use a PUF to create a cryptographic key is as follows. First, during an enrollment phase, a challenge-response pair is created. Then, using the fuzzy extractor, also known as a shielding function, helper data is created, see e.g. WO /2004/066296. On the device, the challenge and the helper data are stored in a non-volatile memory. To derive the cryptographic key, a new response is obtained by evaluating the PUF for the challenge again. By combining the new response with the stored helper data, according to a helper data algorithm, a key is derived. The helper data ensures that the key is the same, each time it is derived.

### Helper data

Helper data, also known as an activation code, is data that is created from a first PUF response, sometimes referred to as a measurement, and a particular data item so that later the particular data may be exactly reconstructed from a second PUF response and the helper data, even though the first and second PUF response may differ slightly. The differences in the second response compared with the first response may be called 'errors'. The helper data can be regarded as error correcting data, in the sense that it corrects for errors in the second response. The function of helper data can encompass more than mere error correcting. For example, together with correcting errors in the second response the helper data can map the response to a predetermined data item, e.g., key. The first response may be called the enrollment response. If the PUF allows multiple inputs, then the first and second responses are typically taken for the same input, i.e., challenge.

There exists a number of ways to create helper data. Using helper data only a limited number of errors can be corrected. How many errors can be corrected depends on the type of helper data and the parameters used during the construction of the helper data.

The data item may be a cryptographic key or the enrollment response itself. The general concept of computing helper data for the purpose of reconstructing the data item is known to persons skilled in the art.

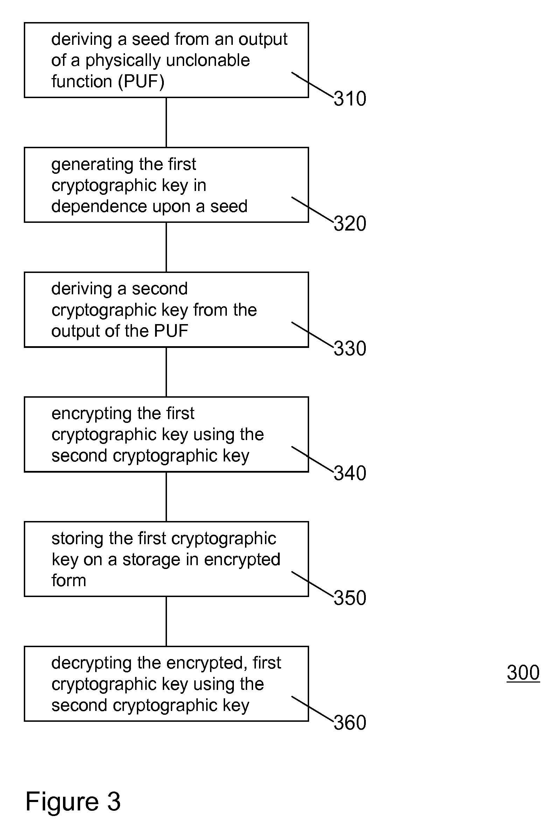

For example, international patent application published under WO 2006/053304, and incorporated herein by reference, describes how helper data may be computed and how the enrollment response may be reconstructed; see for example, figure 3 and the accompanying description. This patent application also gives more details on how keys may be derived from an enrollment response.

The construction and use of helper data is described more fully in, for example, J.P. Linnartz, P. Tuyls, 'New Shielding Functions to Enhance Privacy and Prevent Misuse of Biometric Templates', In J. Kittler and M. Nixon, editors, Proceedings of the 3rd Conference on Audio and Video Based Person Authentication, volume 2688 of Lecture Notes in Computer Science, pages 238-250, Springer- Verlag, 2003 and Y. Dodis et al, 'Fuzzy extractors: How to generate strong keys from biometrics and other noisy data', Advances in cryptology - Eurocrypt 2004, Ser. LNCS, C.Cachin and J. Camenisch, Eds., vol.3027. Springer- Verlag, 2004, pp. 523-540. See also the patent "Reliable Storage Medium Access Control Method and Device", published as international application with publication number WO/2004/066296, and incorporated herein by reference.

For example, consider a PUF whose responses are bit-strings, or whose responses may be converted to bit-strings. For example, the start-up values in an SRAM can be regarded as a PUF with a bit-string response. One way of creating helper data is as follows. An error correcting code, e.g., a BCH code can be selected possibly with a word size larger than the number of bits in the PUF-response. A desired data item is converted into a code word of the error correcting code. Note that possibly multiple code words may be needed. An enrollment response of the PUF is XOR-ed with the code word and the result is stored, e.g., in a memory. Later the PUF is challenged again to obtain a further response. The enrollment response and further response should typically differ in fewer bits than the number of errors that the error correcting code can correct. Depending on the application, a certain probability that the number of errors is too large to be corrected may be tolerated. The further response is XOR-ed with the helper data, to obtain a code word having errors. Note that if there were errors in the further response, than these will also be present in the code word having errors. The code word having errors is corrected using an error correcting algorithm corresponding to the code, e.g., using the BCH algorithm. From the resulting corrected code word, the data item can be extracted. Other suitable error correcting codes include Reed Muller, Golay, and Repetition codes or combinations thereof. As is known in the art of error correcting codes, new codes may be obtained by applying construction techniques to known error correcting codes. For example, two error correcting codes may be combined by a technique called concatenation to obtain a new code. Error correcting code construction algorithms may be used to tailor an error correcting code to the parameters of the PUF, in particular its error rate and the number of output bits, the desired number of reliable output bits, and the error level that is tolerable in practice for a given application.

PUFs may be used in HIS systems. Hardware intrinsic security (HIS) systems are based on physically unclonable functions (PUFs). A PUF can be used to generate a key only when needed, with no need to store the key. The key, once used, can be removed from all internal registers and memories. The key may be reconstructed each time it is used, and disappears when the device is powered down.

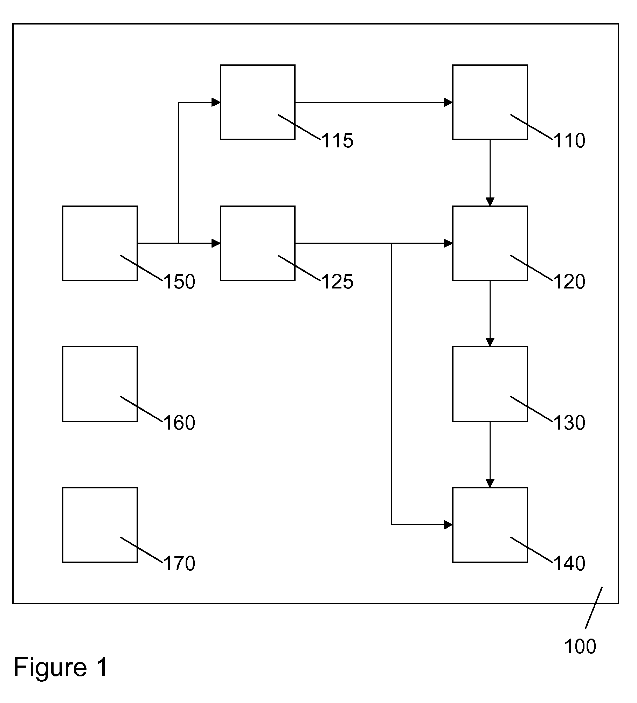

Figure 1 illustrates, in schematic form, a first embodiment 100 of a computing device according to the invention. Some of the data dependencies between the modules are indicated with arrows. Some of the modules shown in Figure 1 are optional.

Computing device 100 comprises a physically unclonable function 150. The physically unclonable function 150 may be any suitable PUF, for example, one of the PUFs mentioned above. The physically unclonable function 150 may be configured to produce a bit-string. Compared over different instantiations of computing device 100 the bit-string is sufficiently random that it may be used as a secure cryptographic key. Sufficiently random depends on the security requirements of the application. For example, an entropy level of 80 bits may be sufficient for domestic encryption of messages. However, when the output of physically unclonable function 150 is obtained multiple times from the same physical instantiation, the output varies comparatively little.

Computing device 100 may comprise a helper data creator (not shown). The helper data creator is connected to physically unclonable function 150. During an enrollment phase, the helper data creator creates helper data for the output so that when physically unclonable function 150 is challenged again, to produce a further output, any errors in the further output compared to the output may be corrected. Correcting of the errors in the output of a PUF may be done with an error corrector connected to physically unclonable function 150 (not shown). The helper data may also be used to map an initial measurement taken in the PUF to a particular output. That is the output of the PUF may be determined by the helper data. Note that the helper data is linked to the PUF for which it is created. If the helper data is used with a different PUF it will very likely produce a different output or no output at all. For example, one way to operate physically unclonable function 150 is as follows: During the enrollment phase a measurement from the PUF is taken. The helper data creator may produce helper data by selecting a random code word and producing the difference between the random code word and the measurement. The random code word or a data word to which it corresponds can be taken as the output of the PUF. When the measurement is taken a second time, the helper data is added to the measurement, the errors are corrected and the originally selected code word is obtained. This corrected code word, or the data word to which it corresponds is then used as the further output. Note that, it is also possible to reconstruct the original measurement taken in the PUF from the corrected codeword, e.g., by subtracting the error vector of the code word, i.e. the difference between codeword having errors and the codeword, from the measurement. For convenience, we will further mostly ignore that a PUF may need error correction.

The helper data creator and/or error corrector including possible storage of the helper data may be integrated with physically unclonable function 150. Storage for the helper data may be external to physically unclonable function 150 or even external to computing device 100. The helper data creator may be external to computing device 100 and connectable to it. The helper data creator is needed only during the enrollment phase.

Physically unclonable function 150 is configured to produce an output during an enrollment phase. The output is forwarded to a seed derivation module 115. Seed derivation module 115 derives a seed from the output. Seed derivation module 115 is optional. The seed may also be taken directly from physically unclonable function 150 without any further processing. Producing the seed may use any of a number of cryptographic primitives. For example, the output may be hashed. Before applying the hash function, the output may be salted, for example, by concatenating the output with a number which is fixed for this computation device, for example a serial number. If salting is also used in other parts of the functions executed on computing device 100, it is preferred if the salt values are different. For example, multiple salt values may be chosen from a sequence, for example, from the integers.

The size of the seed is preferably of sufficient size, and of sufficient entropy to produce cryptographically secure keys from. For example, the seed may be 80 bits or larger. Note that some less sensitive applications may use considerably shorted seed comprising considerably less entropy. For example, RFID tags used for logistic tracking purposes may use smaller keys and/or containing less entropy than financial applications. In general, the appropriate size of keys depends on the applications and its expected threats.

Connected to seed derivation module 115 or possibly directly with physically unclonable function 150 is a key generator 110. Key generator 110 is configured to produce a first cryptographic key. For example, the key generator 110 uses a key generation algorithm, to generate an RSA key. Below is a more detailed algorithm how RSA keys can be generated. Note that the first cryptographic key depends on the seed which depends on the output of physically unclonable function 150 which depends on random physical variations in hardware making up physically unclonable function 150. Preferably, key generator 110 uses a deterministic algorithm so that the same first cryptographic key would be produced if the same output were to be forwarded to seed derivation module 115. Using a deterministic algorithm in seed derivation module 115 has the advantage that the first cryptographic key is directly linked to the hardware of computing device 100. Some of the properties of physically unclonable function 150 are inherited by the first cryptographic key. There is a direct link between the physical hardware of computing device 100 and the first cryptographic key. This improves the non-repudiation properties. If a signature was made with a first cryptographic key produced with a deterministic seed derivation module 115 and key generator 110 and one has access to the computing device 100, and possibly to the helper data which was used by physically unclonable function 150, then it is hard to deny that this signature was indeed made by this computing device 100.

Physically unclonable function 150 is further connected to a key derivation module 125 for deriving a second cryptographic key. Key derivation module 125 preferably uses a key derivation algorithm that is faster to execute that the generation algorithm of key generator 110. For example, the key derivation module 125 may use a hash function. Key derivation module 125 could use a same hash function as, e.g., seed derivation module 115. In that case it is an option to salt the two hash functions with a different salt. The salts may be predetermined and fixed over all instantiations of computing device 100. For example, seed derivation module 115 may use the salt '0' and key derivation module 125 may use the salt '1'. Seed derivation module 115 and key derivation module 125 may also use a salt which is different for each instantiation of computing device 100. In the latter case, the salts improve the confidentiality of the first cryptographic key since in addition to obtaining an output of physically unclonable function 150 an attacker also needs to obtain the salts. Deriving the second cryptographic key may approximately require the same computational effort as deriving the seed.

The PUF allows extracting the second cryptographic key for use in, e.g., symmetric cryptography from the entropy contained in a device. This secret may also be used as a seed value. The computing device 100 may use that seed as a basis for private/public key generation. Computing device 100 may use all or part of the second cryptographic key as a seed, this avoids use of the seed derivation module 115.

Key derivation module 125 is connected to an encryption module 120. Encryption module 120 is configured for encryption using the second encryption key as encryption key. Encryption module 120 is connected to key generator 110. Encryption module 120 takes as input the first cryptographic key and produces as output an encrypted first cryptographic key, encrypted with the second cryptographic key. Preferably, encryption module 120 uses a relatively fast encryption algorithm. For example, encryption module 120 may use a symmetric algorithm such as a block cipher, e.g., AES, or a stream cipher, e.g. RC4, etc. Key derivation module 125 uses a deterministic algorithm. Given the same PUF output the same second cryptographic key will be produced. Given the same PUF output it is preferred that the same first cryptographic key would be generated were it offered again to seed derivation module 115 and key generator 110 (even though generation of the first cryptographic key is done only once), but this is not necessary. The second encryption key depends on and is determined by the output of physically unclonable function 150.

Encryption module 120 is connected, or connectable, to a storage 130. On storage 130 the first cryptographic key may be stored, after it has been encrypted by encryption module 120. Storage 130 may comprise a memory, such as a non-volatile memory, such as a flash memory, a write once memory, etc. Storage 130 may comprise a magnetic recording medium, for example a floppy disc or hard disk. Storage 130 may be internal to computing device 100. Storage 130 may also be external to computing device 100 and connectable to it. Storage on an external storage 130 and/or retrieval from it may use a sender-receiver 170 (see below). Storage 130 may be storage of a more secure type than other storage of computing device 100, but this is not necessary.

Computing device 100 optionally comprises a decryption module 140. The decryption module 140 is configured to decrypt the encrypted first cryptographic key stored on storage 130. Decryption module 140 complements encryption module 120. That is keys that are encrypted by encryption module 120 can be decrypted by decryption module 140. For some encryption/decryption algorithms encryption module 120 and decryption module 140 can share much of their functionality. Symmetric algorithms have the advantage that most of the functionality needed for encryption and decryption can be shared. For example, if encryption module 120 and decryption module 140 implement AES encryption and decryption, respectively, then most of their functions can be shared.

Computing device 100 optionally comprises a further cryptographic module 160. Further cryptographic module 160 may use the first cryptographic key after it has been decrypted by decryption module 140. For example further cryptographic module 160 may use the first cryptographic key to sign or encrypt a message.

Computing device 100 optionally comprises a sender-receiver 170 which may be used to communicate between computing device 100 and an external server or other computing devices. Before a message is sent or after a message has been received by sender-receiver 170 it may be processed by further cryptographic module 160. Sender-receiver 170 may comprise an antenna for wireless communication. Sender-receiver 170 may comprise a connector for connecting to a wire. Sender-receiver 170 may be configured for WiFi, Ethernet, Intranet, Internet, etc.

Computing device 100 may also use the first cryptographic key for internal cryptographic purposes. In this case computing device 100 does not necessarily need sender-receiver 170. For example the first cryptographic key may be used to secure a storage internal to the computing device. For example, computing device 100 may comprise a further storage (not shown). To increase the security of the further storage information that is stored on it is encrypted, for example using a public key. After information is retrieved from the further storage it may be decrypted, e.g., with the first cryptographic key.

It is not necessary for encryption module 120 to use a symmetric algorithm and for key derivation module 125 to produce a symmetric key. Encryption module 120 may use an asymmetric key. For example, key derivation module 125 may produce a public key during the enrollment phase for use in encryption module 120 and a private decryption key for use in decryption module 140. This may be useful if a particular public private key algorithm is needed for, e.g., standardization reasons. Preferably, the private key generation cryptography which could be performed by key derivation module 125 and used by decryption module 140 is much faster than the key generation done in key generator 110. For example, if key generator 110 produces an RSA key, key derivation module 125 could produce a key for the Elliptic Curve Integrated Encryption Scheme (ECIES), which is also known as the Elliptic Curve Augmented Encryption Scheme or the Elliptic Curve Encryption Scheme. ECIES is based on the elliptic curve discrete logarithm problem and allows faster private key generation than the RSA algorithm. Encryption module 120 and decryption module 140 may also implement the encryption and decryption function of a public private key algorithm. In this situation the second cryptographic key should be understood to be an encryption key for encryption module 120 and a corresponding decryption key for decryption module 140. The encryption key and corresponding decryption key together make up a key pair.

During operation, computing device 100 has an enrollment phase and a usage phase which comes after the enrollment phase.

The enrollment phase may be in a secure location, e.g., the manufacturing plant or programming location of computing device 100. The enrollment phase may also be in the field. The generation of the first cryptographic key needs to be done only once, and does not need to be repeated.

During the enrollment phase, physically unclonable function 150 produces an output. The output is typically processed in physically unclonable function 150 to ensure that it can be reproduced reliably later as a further output. For example, physically unclonable function 150 may internally perform a measurement, e.g., reading out the start-up values of an SRAM. From the measurement helper data may be produced. The helper data can later be used to correct errors when the measurement is repeated. If physically unclonable function 150 is sufficiently reliable, then producing helper data may be omitted. The helper data can be stored in a storage of computing device 100, e.g., storage 130, a storage of physically unclonable function 150. The helper data may alternatively or additionally be stored in a storage external to computing device 100, e.g., using sender-receiver 170. Note that the output of physically unclonable function 150 may be equal to the measurement taken internally in physically unclonable function 150. The output may also be mapped through the helper data to some other string.

The output of physically unclonable function 150 is forwarded to seed derivation module 115 to produce a seed. The seed is forwarded to key generator 110. Starting from the seed the first cryptographic key is produced. The output is also forwarded to key derivation module 125 to produce a second cryptographic key. The second cryptographic key is forwarded to encryption module 120. Encryption module 120 encrypts the first cryptographic key using the second cryptographic key as encryption key. The result, i.e., the encrypted first encrypted key is forwarded to storage 130 for storage.

During a usage phase, physically unclonable function 150 produces a further output. If physically unclonable function 150 uses helper data then this may be done as follows: Internal to physically unclonable function 150 a further measurement is performed of the same type as during the enrollment phase. The further measurement may vary somewhat when compared to the measurement. The helper data is applied to the further measurement and an error correcting algorithm is applied. In this way the further output is produced. The further output ought to be the same as the output produced during the enrollment phase.

The further output is forwarded to key derivation module 125, but not to seed derivation module 115. Key derivation module 125 derives the second encryption key. The second encryption key is forwarded to decryption module 140. The encrypted first cryptographic key is retrieved from storage 130. The retrieved key is decrypted using the second cryptographic key by decryption module 140. In this way the first cryptographic key is obtained in computing device 100. The first cryptographic key may be forwarded to further cryptographic module 160 for cryptographic usage. The results of the cryptographic usage may be stored, e.g., in storage 130, or sent out using sender-receiver 170.

Computing device 100 may be implemented using integrated circuits, FPGAs, etc. Parts of computing device 100 may be implemented using software.

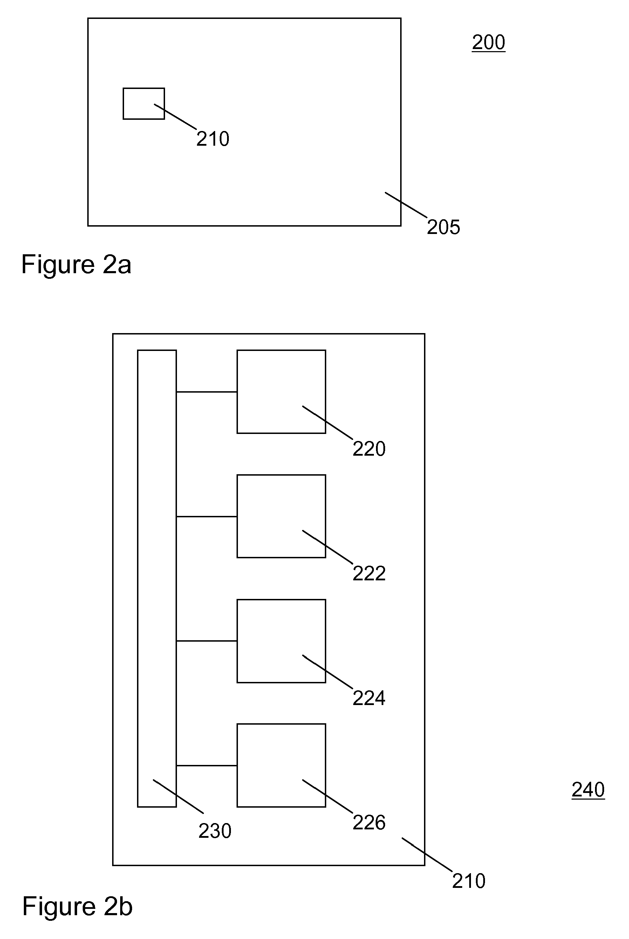

Figure 2a shows in top-view a schematic representation of a smart card 200 according to the invention. The smart card comprises an integrated circuit 210 and a, typically plastic, card 205 supporting integrated circuit 210. The architecture of integrated circuit 210 is schematically shown in Figure 2b. Circuit 210 comprises a processing unit 220, e.g. a CPU, for running computer program components to execute a method according to the invention and/or implement its modules. Circuit 210 comprises a memory 222 for storing programming code, data, cryptographic keys, helper data etc. Part of memory 222 may be read-only. Part of memory 222 may be high security memory, e.g., fuses for storing security related data, e.g., keys. Circuit 210 comprises a physically unclonable function 224. Physically unclonable function 224 may be combined with memory 222. Circuit 210 may comprise a communication element 226, e.g., an antenna, connector pads or both. Circuit 210, memory 222, PUF 224 and communication element 226 may be connected to each other via a bus 230. The card may be arranged for contact and/or contact-less communication, using an antenna and/or connector pads respectively. The smart card may be used, e.g., in a set-top box to control access to content, in a mobile phone to control access to a telecommunication network, in a public transport system to control access to public transport, in a banking card to control access to a bank account, etc.

For example, memory 222 may comprise software for execution by processing unit 220. When the software is executed some of the functions of the modules of computing devices are performed. Memory 222 may comprise storage 130.

The smart card may use a non-memory based PUF, for example, a delay PUF.

Figure 3 illustrates in a flow chart a method according to the invention. The flowchart shows 6 steps in a possible order. Steps 310, 320, 330 and 340 are performed during an enrollment phase. Steps 350 and 360 are optional and performed during a usage phase.

Step 310 comprises deriving a seed from an output of a physically unclonable function. Step 320 comprises generating the first cryptographic key in dependence upon a seed. Step 330 comprises deriving a second cryptographic key from the output of the PUF. Step 340 comprises encrypting the first cryptographic key using the second cryptographic key. Step 350 comprises storing the first cryptographic key on a storage in encrypted form. Step 360 comprises decrypting the encrypted, first cryptographic key using the second cryptographic key

Many different ways of executing the method are possible, as will be apparent to a person skilled in the art. For example, the order of the steps can be varied or some steps may be executed in parallel. For example, step 330 may be performed at any point before step 340 and after obtaining the output of the PUF, possibly in parallel to other steps as long as the second encryption key is available before it is needed for encryption. Moreover, before, in between and after steps of the method other steps may be inserted. The inserted steps may represent refinements of the method such as described herein, or may be unrelated to the method. Moreover, a given step may not have finished completely before a next step is started.

A method according to the invention may be executed using software, which comprises instructions for causing a processor system to perform method 300. Software may only include those steps taken by the server or the computing device during the enrollment and/or the reconstruction phase. The software may be stored in a suitable storage medium, such as a hard disk, a floppy, a memory, etc. The software may be sent as a signal along a wire, or wireless, or using a data network, e.g., the Internet. The software may be made available for download and/or for remote usage on a server.

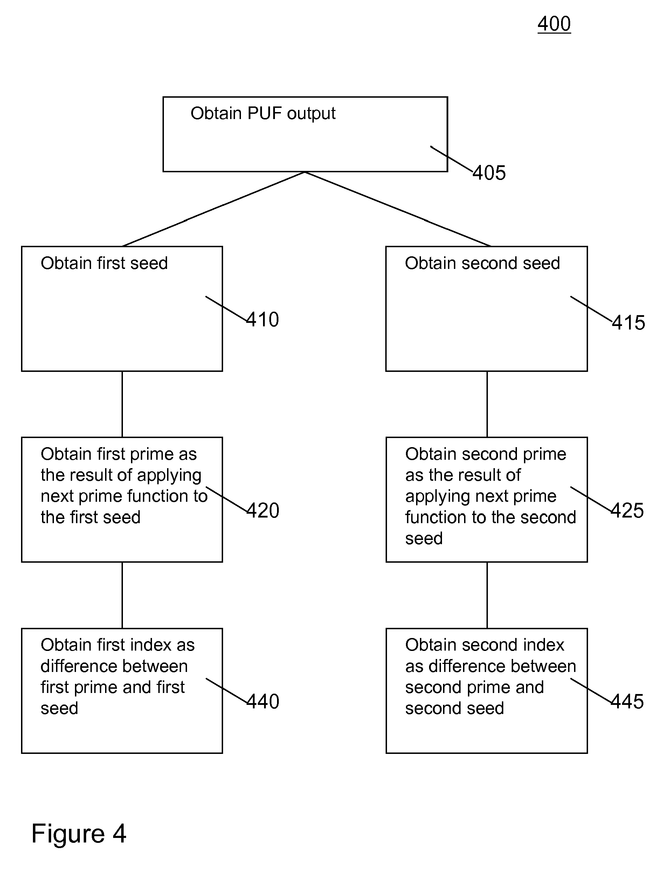

Figure 4 illustrates an advantageous embodiment of a method according to the invention with a flow-chart. The method allows efficient public key pair generation based on physically unclonable functions. Below we will assume that the procedure is executed on a smart card, being a type of computing device, but the procedure is also applicable to other types of computing devices.

The method may be divided into two phases:
1. Enrolment: during enrolment, the PUF reading is done, and the raw data, e.g. raw measurement, is transferred to a helper data creation module. The helper data creation module may comprise an error correction module and a cryptographic module. One way to produce helper data is as follows: The error correction module generates an appropriate size random codeword using a random number generator and selects a random hash function, e.g. a universal hash function or cryptographic hash function, to compute the so-called activation code (AC). AC is the sum or some other addition type function of the random codeword and the raw PUF data. The AC may in addition also include a string indicating the choice of the hash function. This activation code is stored in non-volatile memory on-board the device or on a distant server.
   An addition type function takes two values as input and allows the reconstruction of both the input values given the function's output and one of its inputs. However, with only the output of the addition type function no information is revealed on the input values. Examples of addition type functions include, addition, subtraction, exclusive or, etc. Note for the XOR addition, also called GF(2) addition, addition and subtraction are considered the same. Instead of an addition function, also a permutation could be used.
2. Key Reconstruction (usage phase): In the field, when the device needs to reconstruct its secret key, it first produces a PUF reading. Next the sum of the activation code and the PUF data is computed to retrieve the possibly noisy random codeword used during enrolment. This codeword can now be decoded and the error vector can be retrieved. Once the error vector is known, the raw noisy PUF data can be corrected and the original enrolled PUF data can be recovered. The secret key may be derived from this original information and will always be identical for a given device. The secret key may also be derived from the code word.

These two phases are further described below. Below it is described how an RSA key pair may be derived from the PUF output. RSA is a public key cryptosystem which uses a pair comprising a private and a public key. A private RSA key comprises two large primes p and q, and the public key comprises the product n=p.q of these two primes. Encryption may be achieved by raising a message m, which is to be encrypted, to the power of a public exponent e modulo the public modulus n, and decryption may be achieved by raising the resulting cipher text c to the power of the secret exponent d modulo the public modulus n. Herein d is chosen such that e.d = 1 modulo EulerPhi(n). (EulerPhi represents Euler's phi function).

Generating large primes p and q is a procedure in which many different prime candidates may need to be tried before finding appropriate large prime numbers for RSA key pair generation. This procedure is time consuming, and may take several seconds on a small embedded device. It is an advantage to avoid repeating the key generation every time one needs to have access to the private parameters of the key, e.g., to decrypt a received message.

Public key pair generation may be done as described below. As an example we explain how to generate two 512-bit RSA primes. Two 512-bit RSA primes can be used to generate a 1024 bit RSA modulus, sometimes referred to as a 1024 bit key. The two primes may be of the same size but this is not necessary. Other typical lengths of RSA primes include 256 bits and 1024 bits, giving 512 and 2048 bit keys respectively.

In step 405 an output of the PUF is obtained, e.g., the contents of an SRAM. We assume that any error correcting activity which may be needed to make the output reproducible has been done. From the output a first and a second seed are obtained. For example, the PUF output may be hashed down to produce two odd 512-bit numbers. One may make a number odd by setting its least significant bit to 1. The first and second seed will at least look sufficiently random if a good hash function is used.

Examples of using a hash functions to obtain the seeds include:
- Using an appropriate universal hash function with different indexes for the two seeds,
- Using a standard cryptographic hash function applied twice with different indexes, also known as salts, as part of the hashed input, then applying a stretching function to bring the output back to 512 bits,
- Using a standard cryptographic hash function with 512-bit output such as for instance SHA-512. Two different indexes may be used to generate two different uncorrelated large numbers.
- Using Sponge functions. For example as described in the paper "Sponge Functions" by Guido Bertoni, Joan Daemen, Michael Peeters, and Gilles Van Assche. These structures allow to absorb PUF data little by little and to produce variable length output when squeezed in a second step.

During enrolment, primes are generated from the first and second seed. One possibility is to implement a 'next prime' function. The next prime function produces the next prime number larger than a given seed. One may test a number for primality using a primality test. For example, the Miller-Rabin primality test repeated an appropriate number of times, say six times. Alternatively one may use a deterministic primality test such as the Adleman-Pomerance-Rumely primality test or the Agrawal-Kayal-Saxena primality test. One may check the odd numbers by increments of 2 starting from the first and the second seed to search for a prime. If an odd number is not a prime it is incremented by 2 and the next number is tested.

One may also use speeded-up prime generation to check the next odd numbers by increments of 2, until one of them is not a multiple of any small prime. For example one may perform trial division with all primes below 100. The exact number of such small primes to be tested may be optimized according to the platform it is computed on. Then apply a primality test to check if the number is a prime. When the probability is sufficiently high that the number is not composite, output the first prime p. Then, start over with the second seed and output the second prime q.

Applying a next prime function to the first seed and to the second seed is illustrated in the flowchart elements 420 and 425.

Finding prime numbers can be done on an appropriately programmed smart card or HSM (Hardware Security Module). The expected running time may be high for this phase, but this need only be done once during enrolment. Generating the first cryptographic key may also be done outside of the smart card. Alternatively the first cryptographic key generation can also be activated in the field if the device implements the required primality testing functionality. Again, this only needs to be done once. If several key pairs are desired, a salt value or random index can be added, e.g., into the universal hash computations to generate more than one key pair independently from each other but still derived from the same raw PUF data.

Once the primes are found, a distance, such as a difference or an offset may be computed between the original seed, i.e. the first and second seed and the identified primes. This distance is referred to as Dp and Dq. This distance can be the binary exclusive-or (XOR) distance, i.e. the exclusive or between the generated primes and the seed. The distance may also be the arithmetic difference, or any other appropriate distance function.

There is an advantage to representing a prime with the arithmetic difference between the prime and the seed from which it is computed, using the next prime function. The arithmetic difference is an index indicating a number of candidate prime numbers which were tested to obtain the prime number. The arithmetic difference has a much smaller bit size compared to the bit size of the seed. If the seed is of the order of 512 bits, the difference is expected to fit in only about 8 bits.

Computing a difference between a key and a message is a type of cryptography sometimes referred to as a one-time pad. In a one-time pad a message is encrypted with a key which has at least the same size, e.g., bit size, as the message. In this particular case it turns out that if the prime number is encrypted using a one-time pad method, using arithmetical subtraction, the encryption is remarkably short. Accordingly, using the seed itself as second encryption key and using the arithmetic difference as combination function in one-time pad type of encryption has the surprising effect that the encrypted version starts with a large number of 0's. By discarding the 0's the encrypted prime number fits in much fewer bits than the unencrypted prime number.

Accordingly, this method generates a first cryptographic key which comprises as key components two prime numbers. The prime numbers are generated by generating a number of prime candidates and testing them for primality until the prime number is found. An indication of the number of prime numbers tested, that is, an indication of the difference between the seed and the prime number is remarkably short.

The distances Dp and Dq may be stored on storage 130, possibly together with the activation code. Dp and Dq can be stored in clear format. Encrypting the first cryptographic key comprises representing the prime number with the index. Additionally, the distance, i.e., indices can also be encrypted. For example the second encryption key may comprise the first and second seed and a further encrypting part to encrypt the distances, i.e., indices.

Flow chart elements 440 and 445 illustrate the computation of the difference between a prime and a seed.

Note that it is not necessary to generate the prime number candidates in a linear sequence. Instead a sequence of pseudorandom numbers may be generated and tested for primality until a prime number is found. An index representing the number of tested prime candidates allows fast reconstruction of the prime.

In the field, during a usage phase, the first and second seed are reconstructed from a further PUF output. The further output may be obtained from a noisy PUF reading or measurement and the activation code using the error correction and the hashing procedures. By adding the distances, i.e. offsets, to the generated numbers, produces the prime numbers, i.e. the secret RSA parameters. The remaining computation may be to derive the value of the secret exponent d from the public exponent e, which is not the most time consuming step in RSA key-pair generation and can be done on-the-fly.

An advantage of this method is that the generation of the first cryptographic key is done only once during enrolment to generate the offsets to the next primes. These offsets are not necessarily sensitive information and can be stored in non-volatile memory or on an external server or computing device instead of the key pair itself. Security-wise, this means that the keys are no longer present when the device is powered off, but the same keys can be reconstructed in an efficient way every time the device is powered on and the keys are needed.

Another advantage is that the unencrypted keys are not required when the device is powered off. The method does not need to store any sensitive information in non-volatile memory on the IC, since the offsets without an output of the PUF do not allow one to compute the first cryptographic key.

The method also allows generating private keys used for discrete logarithm based cryptosystems such as DSA, Schnorr, El Gamal, etc. In these systems, the prime numbers need not be kept secret, but a secret exponent needs to be generated. For example, for DSA, a prime p and a prime q are generated such that q divides (p-1). Then a generator g of the subgroup of prime order q is chosen and a secret exponent x smaller than q is chosen. The public key now becomes the quantity y=g^{x} mod p. In this way, the secret exponent can be generated randomly during enrolment. The PUF IC then stores the difference between the hashed-down raw PUF data and the randomly generated secret x as a public value in the non-volatile memory of the IC. The other public system parameters (p,q,y) may also be stored on the IC. During key reconstruction, the PUF data is hashed and allows reconstructing the secret exponent x from the public difference stored in non-volatile memory.

As another example, the method allows to generate the private scalar for point multiplication on an elliptic curve. The public difference between the hashed-down PUF data and the elliptic curve private key d may be stored in non-volatile memory on the IC together with the remaining public system parameters for the elliptic curve cryptosystem and the associated public key Q = d.G where G is a predetermined point on the elliptic curve.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. It will also be appreciated that such a program may have many different architectural designs. For example, a program code implementing the functionality of the method or system according to the invention may be subdivided into one or more subroutines. Many different ways to distribute the functionality among these subroutines will be apparent to the skilled person. The subroutines may be stored together in one executable file to form a self-contained program. Such an executable file may comprise computer executable instructions, for example, processor instructions and/or interpreter instructions (e.g. Java interpreter instructions). Alternatively, one or more or all of the subroutines may be stored in at least one external library file and linked with a main program either statically or dynamically, e.g. at run-time. The main program contains at least one call to at least one of the subroutines. Also, the subroutines may comprise function calls to each other. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth. These instructions may be subdivided into subroutines and/or be stored in one or more files that may be linked statically or dynamically.

The carrier of a computer program may be any entity or device capable of carrying the program. For example, the carrier may include a storage medium, such as a ROM, for example a CD ROM or a semiconductor ROM, or a magnetic recording medium, for example a floppy disc or hard disk. Furthermore, the carrier may be a transmissible carrier such as an electrical or optical signal, which may be conveyed via electrical or optical cable or by radio or other means. When the program is embodied in such a signal, the carrier may be constituted by such cable or other device or means. Alternatively, the carrier may be an integrated circuit in which the program is embedded, the integrated circuit being adapted for performing, or for use in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. A computing device (100) for obtaining a first cryptographic key during an enrollment phase, the computing device comprising a key generator (110) for generating the first cryptographic key in dependence upon a seed, the computing device being configured for storing the first cryptographic key on a storage (130) of the computing device for later cryptographic use of the first cryptographic key on the computing device during a usage phase coming after the enrollment phase, and a physically unclonable function (150), the key generator being configured for deriving the seed from an output of the physically unclonable function
**characterized in that**, the computing device further comprises
- an encryption module (120) for encrypting the first cryptographic key using a second cryptographic key derived from the output of the physically unclonable function,
- the computing device being configured for storing the first cryptographic key on the storage in encrypted form.

2. A computing device as in Claim 1 comprising a decryption module (140) for decrypting the stored, encrypted, first cryptographic key using the second cryptographic key derived from a further output of the physically unclonable function, during the usage phase.

3. A computing device as in any one of claims 1 and 2 wherein the first cryptographic key comprises at least a private key from a cryptographic public-private key pair.

4. A computing device as in any one of claims 1, 2 and 3 wherein the encryption module encrypts the first cryptographic key with a block cipher and the second cryptographic key is a symmetric key.

5. A computing device as in any one of claims 1, 2, 3, and 4 wherein the encrypting of the encryption module comprises computing a difference between the second cryptographic key and the first cryptographic key.

6. A computing device as in any one of claims 1, 2, 3, 4, and 5 wherein deriving of the second cryptographic key from the output comprises applying a hash function to the output.

7. A computing device as in any one of claims 1, 2, 3, 4, 5, and 6 wherein the storage is external to the computing device and connectable to the computing device.

8. An rfid tag, smart card, mobile phone, set-top box, or an electronic circuit comprising a computing device as in any one of claims 1, 2, 3, 4, 5, 6, and 7.

9. A computing device as in any one of claims 1, 2, 3, 4, 5, 6, and 7 wherein the physically unclonable function comprises any one of:
- a memory configured as a physically unclonable function, in particular a volatile memory such as an SRAM, Flip Flop, or Register configured as a physically unclonable function,
- an FPGA configured as a physically unclonable function, in particular an FPGA configured for a butterfly PUF,
- a physically unclonable function based on measuring a delay in an integrated circuit,
- an optical physically unclonable function,
- an oscillation based PUF, an Arbiter PUF.

10. A method for obtaining a first cryptographic key during an enrollment phase, comprising
- deriving (310) a seed from an output of a physically unclonable function
- generating (320) the first cryptographic key in dependence upon the seed,
- storing (350) the first cryptographic key on a storage for later cryptographic use of the first cryptographic key during a usage phase coming after the enrollment phase
**characterized in that** the method further comprises
- encrypting (340) the first cryptographic key using a second cryptographic key derived from the output of the physically unclonable function, and wherein
- storing (350) the first cryptographic key comprises storing the first cryptographic key on the storage in encrypted form.

11. A computer program comprising computer program code means adapted to perform all the steps of the method of claim 10 when the computer program is run on a computer.

12. A computer program as claimed in claim 11 embodied on a computer readable medium.

## Patentansprüche

1. Eine Computervorrichtung (100) zum Erhalt eines ersten kryptographischen Schlüssels während einer Registrierungsphase, wobei die Computervorrichtung einen Schlüsselgenerator (110) umfasst, um den ersten kryptographischen Schlüssel in Abhängigkeit von einem Anfangswert zu erzeugen, wobei die Computervorrichtung konfiguriert ist, um den ersten kryptographischen Schlüssel in einem Speicher (130) der Computervorrichtung zur späteren kryptographischen Verwendung des ersten kryptographischen Schlüssels auf der Computervorrichtung während einer Verwendungsphase zu speichern, die nach der Registrierungsphase kommt, und eine physikalisch nicht klonbare Funktion (150), wobei der Schlüsselgenerator konfiguriert ist, um den Anfangswert von einer Ausgabe der physikalisch nicht klonbaren Funktion abzuleiten,
**dadurch gekennzeichnet, dass** die Computervorrichtung weiter Folgendes umfasst:
- ein Verschlüsselungsmodul (120), um den ersten kryptographischen Schüssel unter Verwendung eines zweiten kryptographischen Schlüssels zu verschlüsseln, abgeleitet von einer Ausgabe der physikalisch nicht klonbaren Funktion,
- wobei die Computervorrichtung konfiguriert ist, um den ersten kryptographischen Schlüssel im Speicher in verschlüsselter Form zu speichern.

2. Eine Computervorrichtung nach Anspruch 1, umfassend ein Entschlüsselungsmodul (140) zur Entschlüsselung des gespeicherten, verschlüsselten ersten kryptographischen Schlüssels unter Verwendung des zweiten kryptographischen Schlüssels, abgeleitet von einer weiteren Ausgabe der physikalisch nicht klonbaren Funktion, während der Verwendungsphase.

3. Eine Computervorrichtung nach einem der Ansprüche 1 und 2, wobei der erste kryptographische Schlüssel mindestens einen privaten Schlüssel von einem kryptographischen öffentlich-privaten Schlüsselpaar umfasst.

4. Eine Computervorrichtung nach einem der Ansprüche 1, 2 und 3, wobei das Verschlüsselungsmodul den ersten kryptographischen Schlüssel mit einer Blockverschlüsselung verschlüsselt und der zweite kryptographische Schlüssel ein symmetrischer Schlüssel ist.

5. Eine Computervorrichtung nach einem der Ansprüche 1, 2, 3 und 4, wobei die Verschlüsselung des Verschlüsselungsmoduls die Berechnung eines Unterschieds zwischen dem zweiten kryptographischen Schlüssel und dem ersten kryptographischen Schlüssel umfasst.

6. Eine Computervorrichtung nach einem der Ansprüche 1, 2, 3, 4 und 5, wobei die Ableitung des zweiten kryptographischen Schlüssels von der Ausgabe die Anwendung einer Hash-Funktion auf die Ausgabe umfasst.

7. Eine Computervorrichtung nach einem der Ansprüche 1, 2, 3, 4, 5 und 6, wobei der Speicher außerhalb der Computervorrichtung liegt und mit der Computervorrichtung verbunden werden kann.

8. Eine Rfid-Etikett, Chipkarte, mobiles Telefon, Set-Top-Box oder elektronische Schaltung, umfassend eine Computervorrichtung nach einem der Ansprüche 1, 2, 3, 4, 5, 6 und 7.

9. Eine Computervorrichtung nach einem der Ansprüche 1, 2, 3, 4, 5, 6 und 7, wobei die physikalisch nicht klonbare Funktion eines der Folgenden umfasst:
- einen Speicher, der als eine physikalisch nicht klonbare Funktion konfiguriert ist, insbesondere ein flüchtiger Speicher wie z.B. SRAM, Flipflop oder Register, konfiguriert als eine physikalisch nicht klonbare Funktion,
- FPGA, konfiguriert als eine physikalisch nicht klonbare Funktion, insbesondere FPGA, konfiguriert als Butterfly-PUF,
- eine physikalisch nicht klonbare Funktion, basierend auf der Messung einer Verzögerung in einer integrierten Schaltung,
- eine optisch-physikalisch nicht klonbare Funktion,
- eine schwingungsbasierte PUF, eine Busverwalter-PUF.

10. Ein Verfahren zum Erhalt eines ersten kryptographischen Schlüssels während einer Registrierungsphase, umfassend
- Ableitung (310) eines Anfangswerts von einer Ausgabe einer physikalisch nicht klonbaren Funktion,
- Erzeugung (320) des ersten kryptographischen Schlüssels in Abhängigkeit vom Anfangswert,
- Speicherung (350) des ersten kryptographischen Schlüssels in einem Speicher zur späteren kryptographischen Verwendung des ersten kryptographischen Schlüssels während einer Verwendungsphase, die nach der Registrierungsphase kommt, **dadurch gekennzeichnet, dass** das Verfahren weiter Folgendes umfasst:
- Verschlüsselung (340) des ersten kryptographischen Schlüssels unter Verwendung eines zweiten kryptographischen Schlüssels, abgeleitet von der Ausgabe der physikalisch nicht klonbaren Funktion, und wobei die Speicherung (350) des ersten kryptographischen Schlüssels die Speicherung des ersten kryptographischen Schlüssels im Speicher in verschlüsselter Form umfasst.

11. Ein Computerprogramm, umfassend Computerprogramm-Codemittel, die ausgelegt sind, um alle Schritte des Verfahrens nach Anspruch 10 durchzuführen, wenn das Computerprogramm auf einem Computer laufen gelassen wird.

12. Ein Computerprogramm nach Anspruch 11, ausgeführt in einem Computerlesbaren Medium.

## Revendications

1. Un dispositif informatique (100) permettant d'obtenir une première clé cryptographique durant une phase d'inscription, le dispositif informatique comprenant un générateur de clé (110) permettant de générer la première clé cryptographique en fonction d'une valeur de départ, le dispositif informatique étant configuré pour stocker la première clé cryptographique sur un stockage (130) du dispositif informatique pour une utilisation cryptographique ultérieure de la première clé cryptographique sur le dispositif informatique durant une phase d'utilisation venant après la phase d'inscription, et une fonction physiquement inclonable (150), le générateur de clé étant configuré pour dériver la valeur de départ à partir d'une sortie de la fonction physiquement inclonable
**caractérisé en ce que** le dispositif informatique comprend en outre
— un module de chiffrement (120) pour le chiffrement de la première clé cryptographique au moyen d'une seconde clé cryptographique dérivée de la sortie de la fonction physiquement inclonable,
— le dispositif informatique étant configuré pour stocker la première clé cryptographique sur le stockage sous forme chiffrée.

2. Un dispositif informatique selon la revendication 1, comprenant un module de déchiffrement (140) pour le déchiffrement de la première clé cryptographique chiffrée stockée au moyen de la seconde clé cryptographique dérivée d'une sortie supplémentaire de la fonction physiquement inclonable, durant la phase d'utilisation.

3. Un dispositif informatique selon l'une quelconque des revendications 1 et 2, dans lequel la première clé cryptographique comprend au moins une clé privée provenant d'une paire de clés cryptographiques publique-privée.

4. Un dispositif informatique selon l'une quelconque des revendications 1, 2 et 3, dans lequel le module de chiffrement chiffre la première clé cryptographique avec un cryptage par blocs et la seconde clé cryptographique est une clé symétrique.

5. Un dispositif informatique selon l'une quelconque des revendications 1, 2, 3 et 4, dans lequel le chiffrement du module de chiffrement comprend le calcul d'une différence entre la seconde clé cryptographique et la première clé cryptographique.

6. Un dispositif informatique selon l'une quelconque des revendications 1, 2, 3, 4 et 5, dans lequel la dérivation de la seconde clé cryptographique à partir de la sortie comprend l'application d'une fonction de hachage à la sortie.

7. Un dispositif informatique selon l'une quelconque des revendications 1, 2, 3, 4, 5 et 6, dans lequel le stockage est externe au dispositif informatique et peut être connecté au dispositif informatique.

8. Une étiquette RFID, carte à puce, téléphone mobile, décodeur ou circuit électronique comprenant un dispositif informatique selon l'une quelconque des revendications 1, 2, 3, 4, 5, 6 et 7.

9. Un dispositif informatique selon l'une quelconque des revendications 1, 2, 3, 4, 5, 6 et 7, dans lequel la fonction physiquement inclonable comprend l'un quelconque parmi :
— une mémoire configurée en tant que fonction physiquement inclonable, en particulier une mémoire volatile telle que SRAM, Flip Flop, ou Registre configuré en tant que fonction physiquement inclonable,
— un circuit logique programmable configuré en tant que fonction physiquement inclonable, en particulier un circuit logique programmable configuré pour une fonction physiquement inclonable papillon,
— une fonction physiquement inclonable fondée sur la mesure d'un retard dans un circuit intégré,
— une fonction physiquement inclonable optique,
— une fonction physiquement inclonable basée sur une oscillation, une fonction physiquement inclonable Arbiter.

10. Un procédé d'obtention d'une première clé cryptographique durant une phase d'inscription, comprenant
— la dérivation (310) d'une valeur de départ à partir d'une sortie d'une fonction physiquement inclonable
— la génération (320) de la première clé cryptographique en fonction de la valeur de départ,
— le stockage (350) de la première clé cryptographique sur un stockage pour une utilisation cryptographique ultérieure de la première clé cryptographique pendant une phase d'utilisation venant après la phase d'inscription
**caractérisé en ce que** le procédé comprend en outre
— le chiffrement (340) de la première clé cryptographique au moyen d'une seconde clé cryptographique dérivée de la sortie de la fonction physiquement inclonable, et dans lequel
— le stockage (350) de la première clé cryptographique comprend le stockage de la première clé cryptographique sur le stockage sous forme chiffrée.

11. Un programme informatique comprenant un moyen formant code de programme informatique adapté pour exécuter toutes les étapes du procédé selon la revendication 10 lorsque le programme informatique est exécuté sur un ordinateur.

12. Un programme informatique selon la revendication 11, mis en pratique sur un support lisible par un ordinateur.
